# EUROPEAN PATENT APPLICATION

(11) **EP 0 825 020 A2**
(43) Date of publication of application: **25.02.1998**
(21) Application number: 97113067.9
(22) Date of filing: 30.07.1997
(51) Int. Cl.: B32B 27/32

(54) **Mat polymeric films**

(30) Priority: 23.08.1996 GB 9618747
(71) Applicant: Hoechst Trespaphan GmbH, 66539 Neunkirchen-Wellesweiler (DE)
(72) Inventor: Gilbert, Tim, Swindon Wiltshire SN3 4BE (GB); Blyth, Stuart, Swindon Wiltshire (GB); Crighton, Allan, Swindon Wilthire (GB)

(57) **Abstract**

Oriented polyolefin films having an opaque polypropylene layer with at least one further polymeric layer adhered to one surface thereof the outer surface of the film defined by the said at least one further polymeric layer having a matt appearance and being formed from a blend of incompatible polymers and the other surface of the film having a higher gloss than layer with the matt appearance, the film being substantially free of antistatic additives and not treated to increase its surface energy. Films in accordance with the present invention can be used as wall charts which can be written on and will adhere to surfaces as a result of static cling.

## Description

This invention concerns polymeric films having static cling, for example for releasable securement to surfaces.

Flip-charts consisting of a number of overlying polymeric sheets which are releasably securable to one another by static cling are described in US 5,010,671. The sheets used have a surface which is capable of being written on, the writing being removable by rubbing if a suitable ink is used, and they are removable from each other for releaseable securement to a surface by means of static cling.

The polymeric sheets proposed for use in making these flip-charts include white and transparent oriented polypropylene films, polyester films, and vinyl films. Particularly preferred films for use in accordance with the teaching of US 5,010,671 are polypropylene films sold by the Mobil Oil Corporation under the Trade Marks OPPalite and Bicor. OPPalite films are oriented polypropylene films which are believed to have two glossy propylene homopolymer outer layers with an opaque core layer of a voided propylene homopolymer.

US Patent 5,258,214 also describes the use of Oppalyte films as preprinted thin plastic films which adhere to walls as a result of static charge.

The present invention seeks to provide improved films which can be written on and also have cling properties.

According to the present invention there are provided an oriented polyolefin film comprising an opaque polypropylene layer with at least one further polymeric layer on one surface thereof, the outer surface of the film defined by the said at least one funher polymeric layer having a matt appearance and being formed from a blend of incompatible polymers and the other surface of the film having a higher gloss than layer with the matt appearance, the film being substantially free of antistatic additives and not treated to increase its surface energy.

Films in accordance with the present invention not only have particularly good cling properties as a result of being substantially free of antistatic additives and not having been treated to increase their surface energy, the matt layer also enables individual sheets of film to be more easily separated from a stack than if both surfaces of the film are substantially glossy, as with the films described in US 5,010,671. Furthermore the present invention provides sheets with different ink receptivity on their opposite surfaces, for example ink on the malt surface being more difficult to remove than that on the other surface of the film.

Films in accordance with the invention should be oriented at least mono-axially, but they are preferably biaxially oriented.

The opaque layer is preferably formed from a polypropylene polymer containing at least 98 percent by weight of units derived from propylene, and more particularly a propylene homopolymer consisting of substantially only units derived from propylene. Propylene homopolymers with an isotactic content of at least 98 percent of weight are especially preferred.
Opacity in the polypropylene layer can be achieved by known methods, for example by the use of an essentially pigmentary filler which imparts opacity in its own right, by the use of a filler which produces microvoids in the polypropylene layer, the microvoids and/or the finer imparting opacity, or by the use of a combination of a pigmentary filler which doesn't cause the formation of microvoids and a filler which creates microvoids, with or without voiding.

Fillers which can be used to create voiding can be inorganic, for example chalk, or organic, for example polyamides or polyesters, the preferred mean particle size of the particles being from 1 to 10 µm. Filler particles with a mean particle size of less than 1 µm tend to act as a pigment rather than a voiding agent.

The filler can be white, coloured or black, depending on the desired color of the films. When the filler causes voiding of the polypropylene polymer layer during orientation of the films, this generally serves to make the films white. In general this will not impart a sufficient opacity to the opaque layer and a pigmentary filler will, therefore be used. An example of a filler which can be used as a pigment it titanium dioxide.

The amount of filler present in the polypropylene layer can usually be selected within wide limits, but excessive amounts of filler can adversely affect the physical properties of the layer, and in some cases it can increase the surface roughness of the layer so that it becomes rougher than the matt layer on the opaque polypropylene layer. It is generally preferred that the polypropylene layer should contain not more than 20 percent by weight of filler whether it be a filler which causes voiding or purely acts as a pigment.

The matt layer is formed from a blend of incompatible polymers, such blends preferably being produced from mixtures of polyolefins which remain phase distinct when they are mixed. Blends of polyolefins which can be used to form the matt layer of films of the present invention are known in the art. Blends of incompatible polyolefins which can be used to form the matt layer of films in accordance with the present invention can be selected from those known in the polypropylene film art.

The matt layer can itself be directly adhered to the opaque layer, but one or more further layers can be present between the matt layer and the opaque layer, for example to improve adhesion of the matt laver to the opaque layer, or if pigmented to provide the films with improved opacity, especially when the opaque polypropylene layer is voided rather than pigmented.

The surface of the opaque layer opposite to the matt layer can form the outer surface of films of the present invention. However, the presence of the filler which imparts opacity to the opaque layer often serves to reduce its surface gloss. Although this reduction in gloss may not be disadvantageous for many end uses, for example it may not prevent ink applied thereto from being rubbed off, higher gloss may be required in certain circumstances. Higher gloss may be required in certain circumstances. Higher gloss can be achieved by the presence of at least one un-filled polymeric layer on the surface of the opaque layer opposite to the matt layer. This un-filled layer can, for example, be a layer of a propylene homopolymer or a layer of a polymer containing units derived from at least two of propylene, ethylene and butene-1.

Films of the present invention will usually be rather thicker than polymeric films used for packaging because of the handling they will be expected to have to withstand in use. Thus they will typically have a thickness of at least 25 µm, with thicknesses of more than 50 µm often being preferred.

Films of the present invention should be substantially free of additives which impart antistatic properties thereto for the reason that in use as a flip-chart film which can be adhered directly to surfaces such as walls they need to retain static charge. In practice it may not be possible to exclude such additives totally from the films due to their being present in the polymer reclaim used to manufacture the films.

In general films of the present invention should not be subjected to treatments which serve to reduce their static cling. However, their static cling may be increased using known treatment processes for the purpose.

Although films in accordance with the present invention can consist of only two layers, these respectively forming their matt and relatively glossy surfaces, they can include one or more, further layers between such layers. Such further layer or layers can be clear, but it is generally preferred that at least one be opaque, for example by the inclusion of a pigment and/or a voiding agent. Other layers when present are, however, preferably non-voided.

The matt layers of fihns of the present invention are preferably from 2 to 5 µm thick, advantageous about 3 µm thick, and the relatively glossy outer layers are preferably at least 1 µm thick, although it is usually unnecessary for them to be more than 3 µm thick.

Films of the present invention are preferably from 30 to 80 µm thick, a particularly preferred thickness range being from 35 to 50 µm.

The gloss level of the matt surface of films of the present invention is preferably less than 12 units, and that of their relatively glossy surface is preferably more than 45 units, both being as measured by ASTM D 245.

Films in accordance with the present invention can be produced by known methods, it generally being preferred to coextrude melts of the respective polymers for the various layers through a slot die and then to stretch the resulting polymeric web sequentiafiy, first in the direction of extrusion over a series of heated rollers and then transversely in a stenter oven.

The following Example is given by way of illustration only.

### Example

A three layer polymer web was produced by coextruding through a slot die a core layer of propylene homopolymer containing 13 percent by weight of submicronic titanium dioxide particles with one outer layer of an incompatible blend of a propylene/ethylene copolymer (4 percent of units derived from ethylene) and polyethylene and a further outer layer of a compatible blend of a propylene/ethylene copolymer and a propylene/ethylene/butene-1 terpolymer containing silica as an antiblock agent.

The web was stretched 4.5 times in the direction of extrusion by passing it over a series of rollers at 110°C with differing peripheral speeds, and then 10 times transverse to the direction of extrusion in a stenter oven at 160°C.

The resulting film was cooled and then wound into a roll without treatment to effect an increase in the surface energy of the film. The film had a total thickness of 40 µm, the core layer being 33.6 µm thick, the matt layer 3.0 µm and the other outer layer, which was glossy, was 1.4 µm thick.

The film was then cut into a series of sheets which were then assembled into a stack. Individual sheets were peeled off the stack relatively easily, and they clung to a vertical wall when applied thereto with either the glossy or the matt surface in contact therewith.

Ink from a felt tip pen applied to the glossy surface of the film could be easily removed therefrom by rubbing, whereas it could not be so easily removed from the matt surface.

## Claims

1. An oriented polyolefin film comprising an opaque polypropylene layer with at least one further polymeric layer adhered to one surface thereof, the outer surface of the film defined by the said at least one further polymeric layer having a matt appearance and being formed from a blend of incompatible polymers and the other surface of the film having a higher gloss than layer with the matt appearance, the film being substantially free of antistatic additives and not treated to increase its surface energy.

2. A film according to claim 1, wherein the matt layer has a gloss of less than 12 units as measured by ASTM D 245.

3. A film according to claim or claim 2, wherein the relatively glossy surface thereof has a gloss of at least 45 units as measured by ASTM D 245.

4. A film according to any of the preceding claims, including at least one further layer between the layers defining the said outer surfaces.

5. A film according to claim 4, wherein the further layer or layers are opaque.

6. A film according to claim 5, wherein the finther layer or layers are non-voided.

7. A film according to any of the preceeding claims, wherein the matt layer is from 2 to 5 µm thick.

8. A film according to any of the preceding claims, wherein the relatively glossy layer has a thickness of at least 1 µm.
